# DEMANDE DE BREVET EUROPEEN

(11) **EP 4 786 426 A2**
(43) Date de publication de la demande: **05.08.2026**
(21) Numéro de dépôt: 26169791.6
(22) Date de dépôt: 28.10.2020
(51) Int. Cl.: C03B 37/012

(54) **ARCHITECTURE POUR GUIDE D'ONDES ELECTROMAGNETIQUES**

(30) Priorité: 31.10.2019 FR 1912283
(62) Demande divisionnaire de: 20800821.9
(71) Demandeur: Université de Limoges, 87000 Limoges (FR); Centre National de la Recherche Scientifique, 75016 Paris (FR)
(72) Inventeur: BENABID, Fetah, 87410 PALAIS-SUR-VIENNE (FR); GEROME, Frédéric, 87100 LIMOGES (FR); AMRANI, Foued, 87000 LIMOGES (FR); OSORIO, Jonas, 87000 LIMOGES (FR); DELAHAYE, Frédéric, 87100 LIMOGES (FR)
(74) Mandataire: IPAZ

(57) **Abrégé**

L'invention concerne un guide d'onde électromagnétique, tel qu'une fibre optique, comprenant un cœur central creux entouré d'une gaine microstructurée formée par un assemblage de cellules élémentaires caractérisé en ce que ladite gaine microstructurée comprend en outre, au moins une cellule élémentaire, dite hybride, comprenant :
- au moins une première cellule (202₂) insérée dans au moins une deuxième cellule (202₁), et
- au moins un élément intermédiaire (810;912,914;1012;1112) reliant l'au moins une première cellule (202₂) et l'au moins une deuxième cellule (202₁), ledit élément intermédiaire présentant une section dont l'aire est inférieure ou égale à 50% de l'aire de la section de chacune desdites cellules qu'il relie, ledit élément intermédiaire ayant un indice de réfraction inférieur ou égal à l'indice de réfraction de chacune desdites cellules élémentaires qu'il relie.

## Description

La présente invention concerne un guide d'ondes électromagnétiques creux, tel qu'une fibre optique creuse. Elle concerne également un dispositif de guidage d'onde électromagnétique mettant en œuvre un tel guide d'onde.

Le domaine de l'invention est celui des guides d'ondes électromagnétiques creux, en particulier de type ceux utilisant le mécanisme du couplage inhibé, telles que des fibres optiques creuses.

### Etat de la technique

Plusieurs types de guide d'ondes électromagnétiques sont actuellement utilisés ou à l'étude. Parmi ces types de guide d'ondes électromagnétique se trouvent des fibres optiques creuses tel que des fibres creuses à cristaux photoniques ou fibres creuses à gaines micro-structurées.

Ces fibres, bien que leur potentiel dépassent l'état de l'art des fibres optiques existantes, présentent tout de même certaines limitations qui nécessitent d'être améliorées.

En particulier, la réalisation de la plus optimale architecture de la fibre bute sur des difficultés de fabrication.

Aussi, les fibres creuses actuellement connues présentent un comportement multimode, ce qui limite leur application dans certains domaines tel que le domaine des télécommunications. Malgré les avancées faites dans le domaine il reste ainsi difficile de contrôler le couplage modal, notamment à cause de limitations structurelles et/ou de fabrications.

Par ailleurs, les fibres creuses actuelles ne permettent pas d'atteindre des rayons de courbure réduit ce qui réduit leur champ d'application.

Un but de la présente invention est de remédier au moins à un de ces inconvénients.

Un autre but de la présente invention est de proposer une architecture de fibre en rendant un idéal d'architecture réalisable.

Un autre but de l'invention est de proposer un guide d'onde électromagnétique permettant un meilleur contrôle du couplage modal.

Encore un autre but de l'invention est de proposer un guide d'onde électromagnétique présentant des performances de guidage améliorées par rapport aux fibres creuses actuelles.

Il est aussi un but de la présente invention de proposer un guide d'onde électromagnétique permettant l'utilisation de rayons de courbure plus petits que ceux mis en œuvre avec les fibres creuses actuelles.

### Exposé de l'invention

L'invention permet d'atteindre au moins l'un de ces buts par un guide d'onde électromagnétique, tel qu'une fibre optique, comprenant un cœur central creux entouré d'une gaine microstructurée formée par un assemblage de cellules élémentaires caractérisé en ce que ladite gaine microstructurée comprend en outre au moins une cellule élémentaire, dite hybride, comprenant :
- au moins une première cellule insérée dans au moins une deuxième cellule, et
- au moins un élément intermédiaire reliant l'au moins une première cellule et l'au moins une deuxième cellule,
ledit élément intermédiaire présentant une section dont l'aire est inférieure ou égale à 50% de l'aire de la section de chacune desdites cellules qu'il relie, ledit élément intermédiaire ayant un indice de réfraction inférieur ou égal à l'indice de réfraction de chacune desdites cellules élémentaires qu'il relie, ledit élément intermédiaire ayant une structure tubulaire comprenant une paroi entourant une zone centrale.

La présente invention permet ainsi de créer une cellule élémentaire hybride dont les performances sont améliorées de couplage modal et de rayon de courbure.

Le guide d'onde optique selon l'invention permet un meilleur contrôle du couplage modal car la présence d'éléments intermédiaires permet une plus grande liberté de positionnement des cellules élémentaires au sein du guide d'onde électromagnétique par rapport aux fibres actuelles.

L'invention permet un agencement des cellules élémentaires sans qu'elles ne se touchent directement, réduisant par conséquent les nœuds et les courbures aigues dans la microstructure, ces derniers pouvant être source de pertes de transmission dans le guidage par couplage-inhibé.

Le guide d'onde optique selon l'invention présente des performances de guidage améliorées par rapport aux fibres creuses actuelles. En effet, un meilleur contrôle du couplage modal engendre intrinsèquement des performances de guidage accrues.

Par ailleurs, le guide d'onde optique selon l'invention permet des rayons de courbure plus petits que les fibres creuses actuelles. En effet la présence d'éléments intermédiaires permet de créer un espace libre entre les cellules élémentaires de sorte qu'il est possible d'atteindre un rayon de courbure plus petit pour chaque cellule élémentaire, et par conséquent le guide d'onde, comparé aux fibres creuses dans lesquelles les cellules élémentaires se touchent ou sont fixées l'une à l'autre et n'ont que très peu de liberté lorsqu'elles sont courbées. Ainsi dans le guide d'onde optique selon l'invention, les éléments intermédiaires assurent une fonction d'attache. Les cellules élémentaires assurent quant à elles une fonction de guidage d'onde, en particulier en confinant l'onde optique dans le cœur creux de la fibre.

Chaque cellule élémentaire est une structure capillaire, généralement tubulaire.

Chaque cellule élémentaire peut avoir une section d'une forme parmi les formes suivantes :
- un cercle ;
- un hexagone ;
- un parallélogramme ;
- une forme dite de goutte d'eau ; ou
- une forme combinant au moins deux des formes précitées.

Avantageusement, les cellules élémentaires formant la gaine microstructurée peuvent par exemple comprendre une majorité de cellules dont les sections ont la même forme.

Au moins un, en particulier chaque, élément intermédiaire peut préférentiellement être une structure capillaire, par exemple tubulaire.

Au moins un, en particulier chaque, élément intermédiaire peut avoir une section d'une forme parmi les formes suivantes :
- un cercle ;
- un parallélogramme ;
- un triangle ; ou
- une forme dont le contour est composé de deux arcs de cercle et de deux côtés rectilignes.

Avantageusement, au moins un, en particulier chaque, élément intermédiaire peut présenter une section dont l'aire est inférieure ou égale à 30% de l'aire de la section de chacune des cellules élémentaires qu'il relie.

Ainsi, cela permet de simuler un espace vide entre une première cellule élémentaire et au moins une deuxième cellule à laquelle elle est liée par un élément intermédiaire n'interférant dans le guidage que de manière négligeable de par ses dimensions réduites.

Avantageusement, au moins un, en particulier chaque, élément intermédiaire peut être fait d'un unique matériau.

Avantageusement, au moins un, en particulier chaque, élément intermédiaire peut être une structure tubulaire comprenant une paroi entourant une zone centrale.

Cette zone centrale peut par exemple être pleine. Elle peut être remplie d'un même matériau que le matériau de la paroi. Alternativement cette zone peut être remplie, ou formée, d'un matériau différent de celui de la paroi.

Cette zone centrale peut selon un autre exemple être creuse. Elle est ainsi remplie d'un gaz neutre, d'air ou de vide.

Avantageusement, au moins une, en particulier chaque, cellule élémentaire reliée par l'élément intermédiaire peut comporter une paroi périphérique entourant une zone centrale, l'épaisseur de la paroi dudit élément intermédiaire pouvant être inférieur à 50% de l'épaisseur de ladite ou de chacune desdites cellules élémentaires qu'il relie.

Avantageusement, au moins une, en particulier chaque, cellule élémentaire peut être exclusivement reliée à toute autre cellule élémentaire par au moins un élément intermédiaire.

Autrement dit, au moins une cellule élémentaire est espacée dans toutes les directions de toute autre cellule élémentaire par un élément intermédiaire.

Ainsi, cela permet d'avoir une gaine microstructurée moins dense.

Ainsi, les performances en terme de contrôle du couplage modal et de sensibilité à la courbure du guide d'onde selon l'invention sont améliorées.

Avantageusement, au moins un, en particulier chaque, élément intermédiaire peut relier uniquement deux cellules élémentaires.

Ainsi, cela permet de facilement disposer une cellule élémentaire dans une région de la fibre moins dense en cellule élémentaire, par exemple une région proche du cœur creux de la fibre.

Avantageusement, au moins un élément intermédiaire peut relier trois cellules élémentaires adjacentes.

Ainsi, il est possible d'obtenir une gaine microstructurée moins dense tout en limitant le nombre d'éléments intermédiaires. Ce qui permet d'améliorer les performances en terme de rayon de courbure et de couplage modal, tout en diminuant le diamètre total du guide, le coût de fabrication, et la complexité du guide d'onde selon l'invention.

Alternativement, chaque cellule élémentaire peut être uniquement reliée à une autre cellule élémentaire par un élément intermédiaire.

En d'autres termes, les cellules élémentaires sont groupées en paires, les cellules élémentaires de chaque paire étant liées l'une à l'autre par un élément intermédiaire.

La présente invention permet ainsi de créer un guide d'onde optique comprenant une gaine microstructurée composée de paires de cellules élémentaires distinctes, présentant ainsi une architecture très simplifiée.

Suivant un mode de réalisation, au moins une, en particulier chaque, cellule élémentaire peut être constituée d'une unique cellule.

Avantageusement le guide selon l'invention peut comprendre une gaine microstructurée comprenant :
- une première couronne périphérique, comprenant une première série de cellules élémentaires ; et
- une deuxième couronne, concentrique et inscrite dans la première couronne périphérique, comprenant une deuxième série de cellules élémentaires.

Ainsi, la gaine microstructurée du guide d'onde selon l'invention comprend deux zones, ou couronnes, pouvant être structurées différemment.

Ces structures peuvent différer l'une de l'autre selon plusieurs facteurs telle que la taille, la forme et/ou la densité des cellules élémentaires qui la composent. Elles peuvent aussi varier l'une de l'autre de par l'utilisation ou non d'éléments intermédiaires pour lier des cellules élémentaires qui la composent.

De plus la structure de la deuxième couronne a un impact direct sur la forme du cœur creux du guide d'onde électromagnétique. Il est ainsi, par exemple, possible de former un cœur creux ayant une forme hypocycloïdale, ou de tout autre forme souhaitée.

Toutes ces variantes permettent ainsi d'améliorer le contrôle possible sur le couplage modal.

Avantageusement, chaque cellule élémentaire de la deuxième couronne du guide selon l'invention peut être reliée à au moins à une cellule élémentaire de la première couronne, par au moins un élément intermédiaire.

La présente invention permet aux cellules de la deuxième couronne d'être espacée de la première couronne. Cela permet une plus grande liberté de positionnement de cellules élémentaire proche du centre de guide optique et ainsi permet un plus grand control de la forme du cœur creux du guide optique.

Suivant un mode de réalisation au moins une, et en particulier chaque, cellule élémentaire peut être réalisée en silice.

Suivant un mode de réalisation au moins une, et en particulier chaque, cellule élémentaire peut être réalisée en :
- un matériau dopé ayant un indice de réfraction plus haut que le silice, par exemple de type germanium ; ou
- un matériau dopé ayant un indice de réfraction plus bas que le silice, par exemple de type fluor ou bore.

Suivant un mode de réalisation au moins un, et en particulier chaque, élément intermédiaire peut être réalisé dans le même matériau qu'une cellule élémentaire.

Ainsi, un même matériau pour les cellules élémentaires et les éléments intermédiaires peut être utilisé, facilitant la production du guide d'onde électromagnétique selon l'invention.

Suivant une alternative de réalisation au moins un, et en particulier chaque, élément intermédiaire peut être réalisé en un matériau différent du matériau d'une cellule élémentaire.

La présente invention donne la possibilité de réduire les coûts de fabrication en utilisant un matériau moins cher pour les éléments intermédiaires que celui utilisé pour les cellules élémentaires.

Avantageusement le cœur central creux du guide selon l'invention peut être rempli d'un gaz neutre, d'air ou de vide.

Avantageusement, le guide d'onde selon l'invention peut comprendre :
- au moins une enveloppe renfermant la gaine microstructurée ; et
- au moins un élément intermédiaire entre au moins une cellule élémentaire et ladite enveloppe.

Ainsi, les performances du guide d'onde selon l'invention sont améliorées en termes de rayon de courbure et de couplage modal.

L'enveloppe peut être réalisé en tout matériau isolant.

Par exemple, l'enveloppe peut être réalisé en silice, en germanium, en fluor ou en bore.

Selon un autre aspect de l'invention il est proposé un dispositif de guidage d'onde électromagnétique mettant en œuvre un guide d'onde électromagnétique selon l'invention.

Suivant un exemple de réalisation, le dispositif selon l'invention peut être un dispositif de micro-usinage utilisant une onde laser, ledit dispositif comprenant au moins un guide d'onde selon l'invention prévu pour être parcouru par ladite onde laser.

Alternativement, le dispositif selon l'invention peut être un dispositif de télécommunications émettant et/ou recevant au moins une onde électromagnétique, ledit dispositif comprenant au moins un guide d'onde selon l'invention prévu pour être parcouru par ladite onde électromagnétique.

### Description des figures et modes de réalisation

D'autres avantages et caractéristiques apparaîtront à l'examen de la description détaillée d'un mode de réalisation nullement limitatif, et des dessins annexés sur lesquels :
- [Fig.1] : la FIGURE 1 est une représentation schématique d'un exemple de deux cellules élémentaires reliées par un élément intermédiaire, et pouvant être mis en œuvre dans un guide d'onde selon l'invention ;
- [Fig.2] : la FIGURE 2 est une représentation schématique d'un exemple de cellule hybride pouvant être mise en œuvre dans un guide d'onde selon l'invention ;
- [Fig.3] : la FIGURE 3 est une représentation schématique d'un exemple de trois cellules élémentaires reliées par un même élément intermédiaire et pouvant être mise en œuvre dans un guide d'onde selon l'invention ;
- [Fig.4] : la FIGURE 4 est une représentation schématique d'un exemple d'un cellule élémentaire reliée à deux autres cellules élémentaires par des éléments intermédiaires, et pouvant être mise en œuvre dans un guide d'onde selon l'invention ;
- [Fig.5] : la FIGURE 5 est une représentation schématique d'un exemple d'un cellule élémentaire reliée à deux autres cellules élémentaires par des éléments intermédiaires, et pouvant être mise en œuvre dans un guide d'onde selon l'invention ;
- [Fig.6] : la FIGURE 6 est une représentation schématique d'exemples de formes de cellules élémentaires pouvant être mis en œuvre dans un guide d'onde selon l'invention ;
- [Fig.7] : la FIGURE 7 est une représentation schématique d'exemples de formes de d'éléments intermédiaires pouvant être mis en œuvre dans un guide d'onde selon l'invention ;
- [Fig.8] : la FIGURE 8 est une représentation schématique d'un exemple de réalisation non limitatif d'un guide d'onde électromagnétique selon l'invention ;
- [Fig.9] : la FIGURE 9 est une représentation schématique d'un autre exemple de réalisation non limitatif d'un guide d'onde électromagnétique selon l'invention ;
- [Fig.10] : la FIGURE 10 est une représentation schématique d'un autre exemple de réalisation non limitatif d'un guide d'onde électromagnétique selon l'invention ;
- [Fig.11] : la FIGURE 11 est une représentation schématique d'un autre exemple de réalisation non limitatif d'un guide d'onde électromagnétique selon l'invention ; et
- [Fig.12] : la FIGURE 12 est une représentation très schématique, d'un exemple de réalisation non limitatif, d'un dispositif de guidage d'onde électromagnétique mettant en œuvre un guide d'onde électromagnétique selon l'invention,
- [Fig.13] : la FIGURE 13 est une représentation schématique d'un autre exemple de réalisation non limitatif d'un guide d'onde électromagnétique selon l'invention ;
- [Fig.14] : la FIGURE 14 est une représentation schématique d'un autre exemple de réalisation non limitatif d'un guide d'onde électromagnétique selon l'invention ;
- [Fig.15] : la FIGURE 15 est une représentation schématique d'un autre exemple de réalisation non limitatif d'un guide d'onde électromagnétique selon l'invention ;
- [Fig.16] : la FIGURE 16 est une représentation schématique d'un autre exemple de réalisation non limitatif d'un guide d'onde électromagnétique selon l'invention ;

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

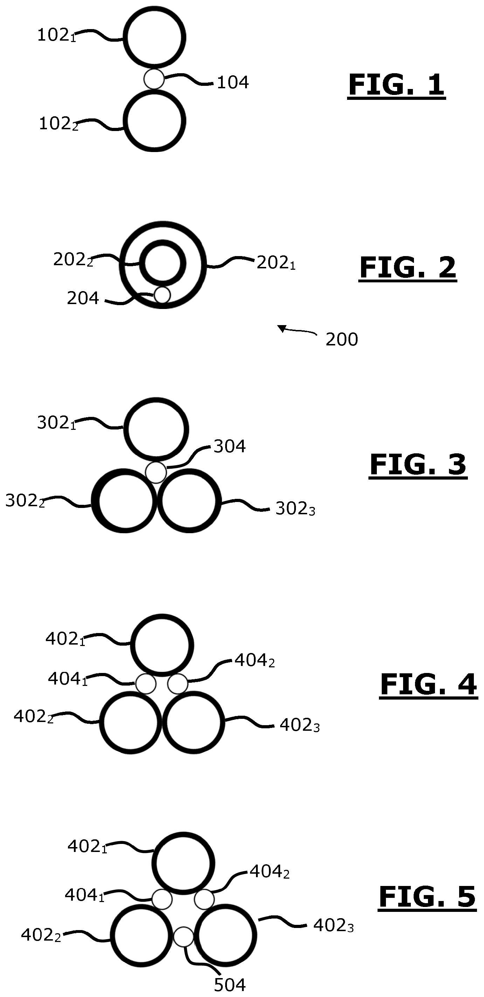

La FIGURE 1 est une représentation schématique d'un exemple de deux cellules élémentaires reliées par un élément intermédiaire, et pouvant être mis en œuvre dans un guide d'onde selon l'invention.

La FIGURE 1 illustre par une vue en coupe, deux cellules élémentaires 102₁ et 102₂ reliées l'une à l'autre par un élément intermédiaire 104.

Dans l'exemple de la FIGURE 1, les deux cellules élémentaires 102 sont identiques, et l'élément intermédiaire 104 à une section dont l'aire est inférieure à l'aire de la section de chacune des cellules 102 qu'il relie.

Dans l'exemple de la FIGURE 1, les deux cellules élémentaires 102 ont une section dont la forme est identique, en l'occurrence circulaire. Alternativement, il est bien sûr possible d'avoir deux cellules de formes différentes et/ou, d'une autre forme que la forme circulaire.

Dans l'exemple de la FIGURE 1 les deux cellules élémentaires 102 ont une section dont l'aire est identique. Alternativement, il est possible d'avoir deux cellules élémentaires dont les sections respectives ont une aire différente. Selon l'invention, l'élément intermédiaire 104 a toutefois toujours une section dont l'aire est inférieure à l'aire de la section de chacune des cellules 102 qu'il relie, et en particulier est au maximum égale à 50% de l'aire de la plus petite cellule élémentaire 102, préférentiellement au maximum égale à 30%.

La FIGURE 2 est une représentation schématique d'un exemple cellule hybride pouvant être mis en œuvre dans un guide d'onde selon l'invention.

La FIGURE 2 illustre par une vue en coupe, une cellule élémentaire hybride 200. Cette cellule élémentaire hybride est constituée :
- d'une première cellule élémentaire 202₁ ;
- d'une deuxième cellule élémentaire 202₂, insérée dans la première cellule élémentaire 202₁ ; et
- d'un élément intermédiaire 204 reliant la première cellule élémentaire 202₁ à la deuxième cellule élémentaire 202₂.

Similairement à l'élément intermédiaire 104 de la FIGURE 1, l'élément intermédiaire 204 de la cellule élémentaire hybride 200 a une section dont l'aire est inférieure à l'aire de la section de chacune des cellules 202 qu'il relie.

La section de l'élément intermédiaire 204 est par exemple inférieure ou égale à 50%, de préférence inférieure ou égale à 30%, de la section de la plus petite des cellules élémentaires 202₁ et 202₂, c'est-à-dire de la section de la cellule élémentaire hybride 202₂.

La FIGURE 3 est une représentation schématique d'un exemple de trois cellules élémentaires reliées par un élément intermédiaire, et pouvant être mis en œuvre dans un guide d'onde selon l'invention.

La FIGURE 3 illustre par une vue en coupe, trois cellules élémentaires 302₁, 302₂ et 302₃ reliées l'une à l'autre par un élément intermédiaire 304. L'élément intermédiaire 304 a une section dont l'aire est inférieure à l'aire de la section de chacune des cellules 302 qu'il relie.

La section de l'élément intermédiaire 304 est par exemple inférieure ou égale à 50%, de préférence inférieure ou égale à 30%, de la section de chaque cellule élémentaires 302.

Dans l'exemple illustré en FIGURE 3, la cellule élémentaire 302₁ est reliée au cellules 302₂ et 302₃ uniquement par l'élément intermédiaire 304. Par contre, les cellules 302₂ et 302₃ sont reliées directement l'une à l'autre en plus d'être reliées par l'élément intermédiaire 304.

Alternativement, il est aussi possible d'avoir trois cellules élémentaires uniquement reliées l'une à l'autre par l'intermédiaire d'un même élément intermédiaire.

La FIGURE 4 est une représentation schématique d'un exemple de trois cellules élémentaires reliées par deux éléments intermédiaires, et pouvant être mis en œuvre dans un guide d'onde selon l'invention.

La FIGURE 4 illustre par une vue en coupe, une cellule élémentaire 402₁ reliée à deux autres cellules élémentaires 402₂ et 402₃ respectivement par des éléments intermédiaires 404₁ et 404₂. Les éléments intermédiaires 404₁ et 404₂ ont chacun une section dont l'aire est inférieure à l'aire de la section de chacune des cellules qu'il relie.

La section de chaque élément intermédiaire 404₁ et 404₂ est par exemple inférieure ou égale à 50%, de préférence inférieure ou égale à 30%, de la section de chaque cellule élémentaires 402₁-402₃ qu'il relie.

Dans l'exemple illustré en figure 4, la cellule élémentaire 402₁ est reliée au cellules 402₂ et 402₃ uniquement par les éléments intermédiaires 404₁ et 404₂. Par contre, les cellules 402₂ et 402₃ sont reliées directement l'une à l'autre en plus d'être reliées à la cellule 402₁ par l'élément intermédiaire, respectivement 404₁ et 404₂.

La FIGURE 5 est une représentation schématique d'un exemple de trois cellules élémentaires reliées par trois éléments intermédiaires, et pouvant être mis en œuvre dans un guide d'onde selon l'invention.

L'exemple représenté sur la FIGURE 5 comprend tous les éléments de l'exemple de la FIGURE 4.

En plus, dans l'exemple de la FIGURE 5, les cellules élémentaire 402₂ et 402₃ ne se touchent pas et sont reliées entre-elles par un élément intermédiaire 504.

Dans chacun des exemples qui viennent d'être décrits en référence aux FIGURES 1-5, chaque élément intermédiaire 104, 204, 304, 404₁, 404₂ et 504a une section dont la forme est circulaire.

Alternativement, il est possible d'avoir un élément intermédiaire ayant une section dont la forme est différente.

Dans chacun des exemples qui viennent d'être décrits en référence aux FIGURES 1-5, les cellules élémentaires 102, 202, 302, 402 et 502 ainsi que les éléments intermédiaires 104, 204, 304, 404 et 504 sont chacun une structure tubulaire comprenant une paroi entourant une zone centrale. L'épaisseur de la paroi de chaque l'élément intermédiaire 104, 204, 304, 404 et 504 est de préférence inférieure à l'épaisseur de la paroi de chacune des cellules 102, 202, 302, 402 ou 502 qu'il relie, et en particulier inférieure ou égale à 50% de la plus fine paroi des cellules 102, 202, 302, 402 ou 502 qu'il relie.

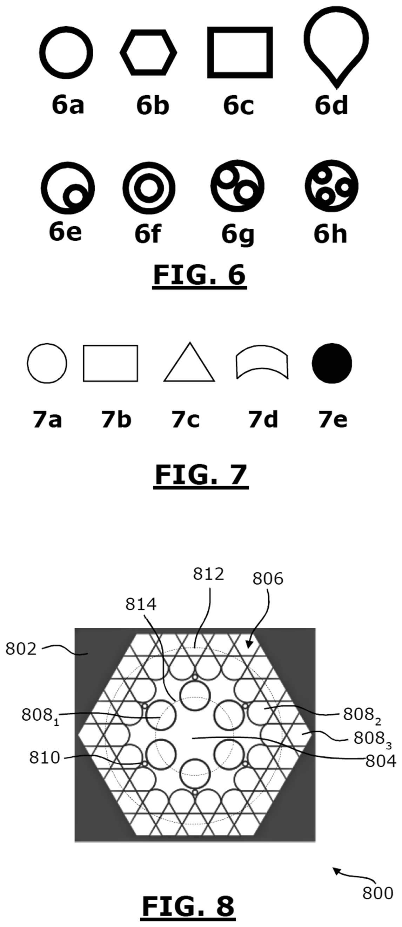

La FIGURE 6 est une représentation schématique d'exemples de formes de cellules élémentaires pouvant être mis en œuvre dans un guide d'onde selon l'invention.

Comme précédemment cité, les cellules élémentaires comprises dans le guide d'onde selon l'invention peuvent avoir une section ayant diverses formes. La section d'une cellule élémentaire peut ainsi par exemple avoir la forme d'un cercle 6a, d'un hexagone 6b, d'un parallélogramme 6c ou la forme dite de goutte d'eau 6d.

De plus une cellule élémentaire, dite hybride, peut avoir pour section, au moins une première forme inscrite dans une deuxième forme, ces formes pouvant être ou non identiques et pouvant prendre une des formes précitées.

Les vues 6e et 6f illustrent des cellules hybrides avec une section ayant la forme d'un cercle inscrit dans un autre cercle. Le cercle inscrit des vues 6e et 6f est respectivement en contact ou non avec l'autre cercle.

Les vues 6g et 6h illustrent des cellules élémentaires hybrides avec une section ayant la forme d'une pluralité des cercles inscrits dans un même autre cercle. Ces vues 6g et 6h illustrent respectivement deux et trois cercles inscrits dans un même autre cercle.

Il est en outre possible pour une cellule élémentaire d'avoir une section dont la forme est une combinaison des formes précitées.

La FIGURE 7 est une représentation schématique d'exemples de formes de d'éléments intermédiaires.

Comme précédemment cité, les éléments intermédiaires compris dans le guide d'onde selon l'invention peuvent avoir une section ayant diverses formes.

La section d'un élément intermédiaire peut ainsi par exemple avoir la forme d'un cercle 7a, d'un parallélogramme 7b, d'un triangle 7c ou une forme 7d dont le contour est composé de deux arcs de cercle et de deux côtés rectilignes. Les exemples 7a-7d illustrent des éléments intermédiaires ayant une structure tubulaire, comprenant une paroi entourant une zone centrale.

Alternativement ces éléments intermédiaires peuvent avoir une structure pleine. Cette structure pleine est soit en un unique matériaux soit comprenant une paroi en un premier matériau venant entourer une zone centrale remplie d'un deuxième matériau.

L'exemple 7e illustre un élément intermédiaire dont la section a la forme d'un disque. Cette exemple 7e est l'exemple de structure pleine, comprenant un unique matériau, analogue de l'exemple 7a ayant une structure tubulaire.

La FIGURE 8 est une représentation schématique, selon une vue de coupe, d'un exemple de réalisation non limitatif d'un guide d'onde électromagnétique selon l'invention.

Le guide d'onde 800 représenté sur la FIGURE 8 comprend une enveloppe 802, ayant une forme extérieure rectangulaire et une forme intérieure hexagonale.

Le guide d'onde 800 comprend en outre un cœur creux 804 entouré d'une gaine microstructurée 806. La gaine 806 est formée par un assemblage de cellules élémentaires.

Dans l'exemple de la FIGURE 8, les cellules élémentaires présentent différentes sections. Par exemple la cellule élémentaire 808₁ a une section de forme circulaire, la cellule élémentaire 808₂ a une section en forme de goutte d'eau tronquée et la cellule élémentaire 808₃ a une section de forme hexagonale.

La gaine 806 comprend en outre des éléments intermédiaires 810 reliant des cellules élémentaires 808.

Les éléments intermédiaires 810 présentent une section dont l'aire est inférieure ou égale à 30% de l'aire de la section de la plus petite des cellules élémentaires qu'il relie. Dans l'exemple de la FIGURE 8, les éléments intermédiaires 810 viennent relier trois cellules élémentaires adjacentes.

La gaine 806 comprend une première couronne périphérique 812, comprenant une première série de cellules élémentaires et une deuxième couronne 814, concentrique et inscrite dans la première couronne 812, comprenant une deuxième série de cellules élémentaires.

La deuxième couronne 814 ne comprend qu'une seule rangée de cellules élémentaires distribuées suivant une trajectoire circulaire.

Chaque cellule élémentaire de la deuxième couronne 814 est reliée à deux cellules élémentaires de la première couronne 812, par un élément intermédiaire 810.

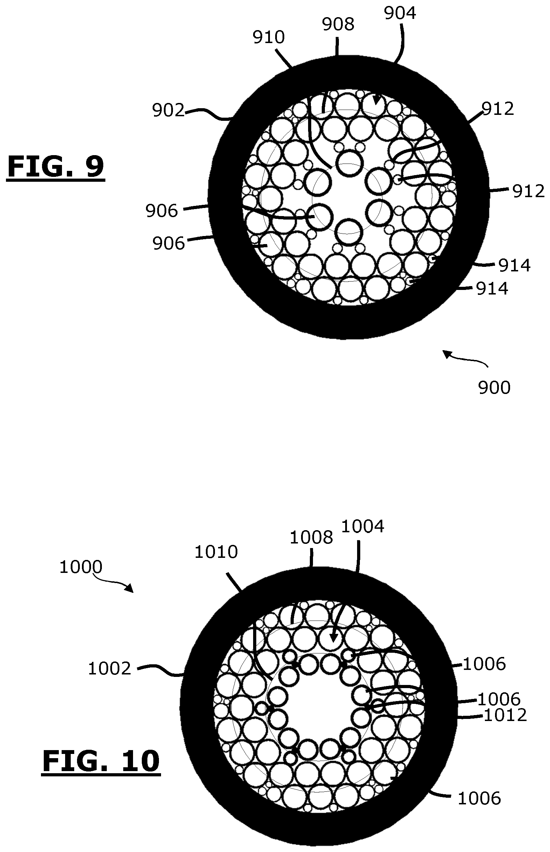

La FIGURE 9 est une représentation schématique, selon une vue de coupe, d'un exemple de réalisation non limitatif d'un guide d'onde électromagnétique selon l'invention.

Le guide d'onde 900 représenté sur la FIGURE 9 comprend une enveloppe 902, ayant une forme circulaire renfermant une gaine microstructurée 904.

Les cellules élémentaires 906 de la gaine microstructurée 904 du guide d'onde 900 ont une section dont la forme est exclusivement circulaire.

Tout comme pour le guide d'onde 800 de la FIGURE 8, la gaine 904 du guide d'onde 900 de la FIGURE 9 comprend une première couronne périphérique 908, comprenant une première série de cellules élémentaires 906 et une deuxième couronne 910, concentrique et inscrite dans la première couronne, comprenant une deuxième série de cellules élémentaires 906.

A la différence de l'exemple de la FIGURE 8, chaque cellule élémentaire 906 de la deuxième couronne 910 est ici reliée à deux cellules élémentaires 906 de la première couronne 908, par deux éléments intermédiaires 912.

Le guide d'onde 900 de la FIGURE 9 diffère en outre du guide d'onde 800 de la FIGURE 8 en ce qu'il comprend d'autres éléments intermédiaires 914 venant relier d'autres cellules élémentaires 904 au sein de la première couronne 908, entre-elles ou avec l'enveloppe 902.

La FIGURE 10 est une représentation schématique, selon une vue de coupe, d'un autre exemple de réalisation non limitatif d'un guide d'onde électromagnétique selon l'invention.

Le guide d'onde 1000 représenté sur la FIGURE 10 comprend une enveloppe 1002, ayant une forme circulaire renfermant une gaine microstructurée 1004.

Les cellules élémentaires 1006 de la gaine microstructurée 1004 du guide d'onde 1000 ont une section dont la forme est exclusivement circulaire.

Tout comme pour le guide d'onde 900 de la FIGURE 9, la gaine 1004 du guide d'onde 1000 de la FIGURE 10 comprend une première couronne périphérique 1008, comprenant une première série de cellules élémentaires 1006 et une deuxième couronne 1010, concentrique et inscrite dans la première couronne 1008, comprenant une deuxième série de cellules élémentaires 1006.

A la différence de l'exemple de la FIGURE 9, un même élément intermédiaire 1012 est utilisé pour relier deux cellules élémentaires adjacentes 1006 de la deuxième couronne à une même cellule 1006 de la première couronne 1008.

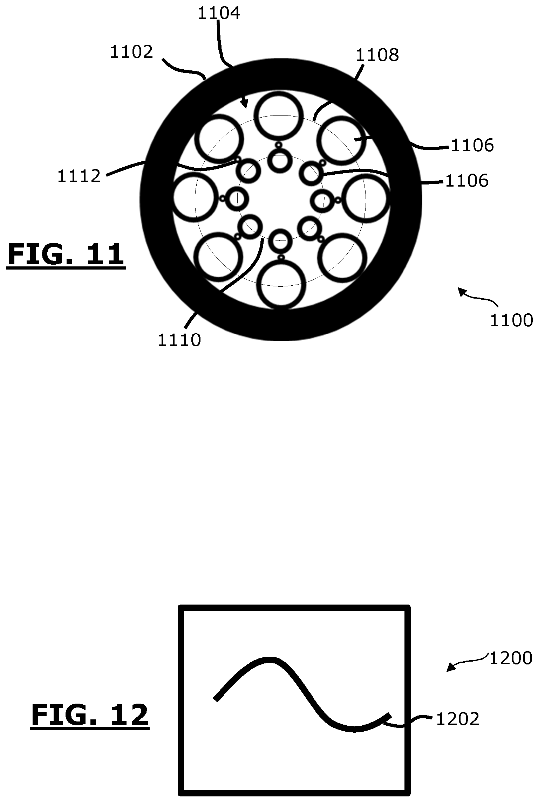

La FIGURE 11 est une représentation schématique, selon une vue de coupe, d'un exemple de réalisation non limitatif d'un guide d'onde électromagnétique selon l'invention.

Le guide d'onde 1100 représenté sur la FIGURE 11 comprend une enveloppe 1102, ayant une forme circulaire renfermant une gaine microstructurée 1104.

Les cellules élémentaires 1106 de la gaine microstructurée 1104 du guide d'onde 1100 ont une section dont la forme est exclusivement circulaire.

La gaine 1104 du guide d'onde 1100 de la FIGURE 11 comprend une première couronne périphérique 1108, comprenant une première série de cellules élémentaires 1106 et une deuxième couronne 1110, concentrique et inscrite dans la première couronne 1108, comprenant une deuxième série de cellules élémentaires 1106.

Chacune des première 1108 et deuxième 1110 couronnes comprennent une unique rangée de cellules élémentaires 1106 distribuées suivant une trajectoire circulaire.

Les cellules élémentaires 1106 de la première couronne 1108 ont une section plus grande que celle des cellules élémentaires 1106 de la deuxième couronne 1110.

Chaque cellule élémentaire 1106 de la deuxième couronne 1110 est reliée à une unique cellule élémentaire 1106 de la première couronne 1108 par un élément intermédiaire 1112.

La FIGURE 12 est une représentation très schématique, d'un exemple de réalisation non limitatif, d'un dispositif de guidage d'onde électromagnétique mettant en œuvre un guide d'onde électromagnétique selon l'invention.

Le dispositif 1200 de guidage d'onde électromagnétique comprend un guide d'onde électromagnétique 1202.

Le guide d'onde électromagnétique 1202 peut être celui de l'une quelconque des FIGURES 8-11.

Le dispositif 1200 peut par exemple être un dispositif de micro-usinage utilisant une onde laser prévue pour être véhiculée par le guide d'onde 1202.

Alternativement, le dispositif 1200 peut être un dispositif de télécommunications émettant et/ou recevant au moins une onde électromagnétique prévue pour être véhiculée par le guide d'onde 1202.

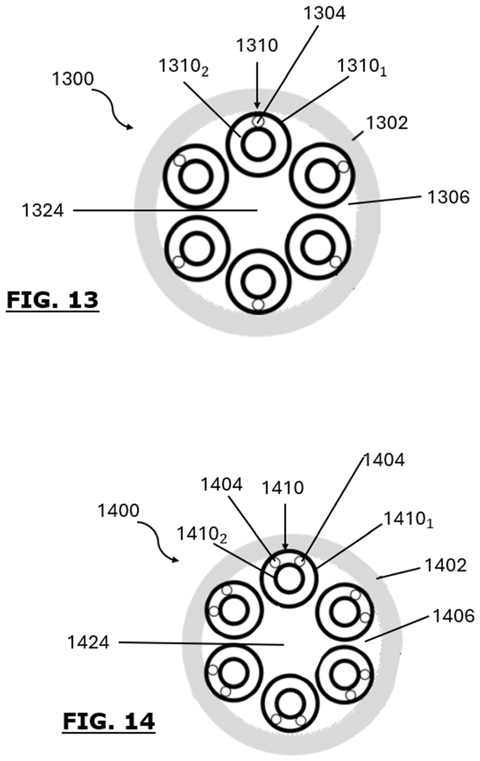

La FIGURE 13 est une représentation schématique, selon une vue de coupe, d'un exemple de réalisation non limitatif d'un guide d'onde électromagnétique selon l'invention.

Le guide d'onde 1300 représenté sur la FIGURE 13 comprend une enveloppe 1302, ayant une forme extérieure circulaire.

Le guide d'onde 1300 comprend en outre un cœur creux 1324 entouré d'une gaine microstructurée 1306. La gaine 1306 est formée par un assemblage de cellules élémentaires 1310 dites hybrides.

Dans l'exemple de la FIGURE 13, les cellules élémentaires 1310 présentent :
- une première cellule élémentaire 1310₁ ;
- une deuxième cellule élémentaire 1310₂, insérée dans la première cellule élémentaire 1310₁ ; et
- un élément intermédiaire 1304 reliant la première cellule élémentaire 1310₁ à la deuxième cellule élémentaire 1310₂.

L'élément intermédiaire 1304 de chaque cellule élémentaire hybride a une section dont l'aire est inférieure à l'aire de la section de chacune des cellules qu'il relie.

La section de l'élément intermédiaire 1304 est par exemple inférieure ou égale à 50%, de préférence inférieure ou égale à 30%, de la section de la plus petite des cellules élémentaires 1310₁ et 1310₂, c'est-à-dire de la section de la cellule élémentaire hybride 1310₂.

La FIGURE 14 est une représentation schématique, selon une vue de coupe, d'un exemple de réalisation non limitatif d'un guide d'onde électromagnétique selon l'invention.

Le guide d'onde 1400 représenté sur la FIGURE 14 comprend une enveloppe 1402, ayant une forme extérieure circulaire.

Le guide d'onde 1400 comprend en outre un cœur creux 1424 entouré d'une gaine microstructurée 1406. La gaine 1406 est formée par un assemblage de cellules élémentaires 1410 dites hybrides.

Dans l'exemple de la FIGURE 14, les cellules élémentaires 1410 présentent :
- une première cellule élémentaire 1410₁ ;
- une deuxième cellule élémentaire 1410₂, insérée dans la première cellule élémentaire 1410₁ ; et
- deux éléments intermédiaires 1404 reliant la première cellule élémentaire 1410₁ à la deuxième cellule élémentaire 1410₂.

Chaque élément intermédiaire 1404 de chaque cellule élémentaire 1410 hybride a une section dont l'aire est inférieure à l'aire de la section de chacune des cellules qu'il relie.

La section de l'élément intermédiaire 1410 est par exemple inférieure ou égale à 50%, de préférence inférieure ou égale à 30%, de la section de la plus petite des cellules élémentaires 1410₁ et 1410₂, c'est-à-dire de la section de la cellule élémentaire hybride 1410₂.

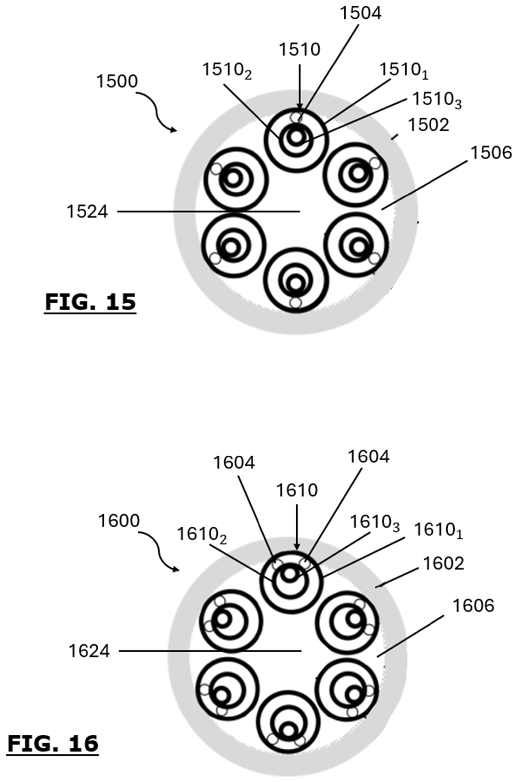

La FIGURE 15 est une représentation schématique, selon une vue de coupe, d'un exemple de réalisation non limitatif d'un guide d'onde électromagnétique selon l'invention.

Le guide d'onde 1500 représenté sur la FIGURE 15 comprend une enveloppe 1502, ayant une forme extérieure circulaire.

Le guide d'onde 1500 comprend en outre un cœur creux 1524 entouré d'une gaine microstructurée 1506. La gaine 1506 est formée par un assemblage de cellules élémentaires 1510 dites hybrides.

Dans l'exemple de la FIGURE 15, les cellules élémentaires 1510 présentent :
- une première cellule élémentaire 1510₁ ;
- une deuxième cellule élémentaire 1510₂, insérée dans la première cellule élémentaire 1510₁ ;
- une troisième cellule élémentaire 1510₃, insérée dans la deuxième cellule élémentaire 1510₂ ; et
- un élément intermédiaire 1504 reliant la première cellule élémentaire 1510₁ à la deuxième cellule élémentaire 1510₂.

Chaque élément intermédiaire 1504 de chaque cellule élémentaire 1510 hybride a une section dont l'aire est inférieure à l'aire de la section de chacune des cellules qu'il relie.

La section de l'élément intermédiaire 1510 est par exemple inférieure ou égale à 50%, de préférence inférieure ou égale à 30%, de la section de la plus petite des cellules élémentaires 1510₁ et 1510₂ et 1510₃, c'est-à-dire de la section de la cellule élémentaire hybride 1510₃.

La FIGURE 16 est une représentation schématique, selon une vue de coupe, d'un exemple de réalisation non limitatif d'un guide d'onde électromagnétique selon l'invention.

Le guide d'onde 1600 représenté sur la FIGURE 16 comprend une enveloppe 1602, ayant une forme extérieure circulaire.

Le guide d'onde 1600 comprend en outre un cœur creux 1624 entouré d'une gaine microstructurée 1606. La gaine 1606 est formée par un assemblage de cellules élémentaires 1610 dites hybrides.

Dans l'exemple de la FIGURE 16, les cellules élémentaires 1610 présentent :
- une première cellule élémentaire 1610₁ ;
- une deuxième cellule élémentaire 1610₂, insérée dans la première cellule élémentaire 1610₁ ;
- une troisième cellule élémentaire 1610₃, insérée dans la deuxième cellule élémentaire 1610₂ ; et
- deux éléments intermédiaires 1604 reliant la première cellule élémentaire 1610₁ à la deuxième cellule élémentaire 1610₂.

Chaque élément intermédiaire 1604 de chaque cellule élémentaire 1610 hybride a une section dont l'aire est inférieure à l'aire de la section de chacune des cellules qu'il relie.

La section de l'élément intermédiaire 1610 est par exemple inférieure ou égale à 50%, de préférence inférieure ou égale à 30%, de la section de la plus petite des cellules élémentaires 1610₁ et 1610₂ et 1610₃, c'est-à-dire de la section de la cellule élémentaire hybride 1610₃.

Bien entendu, l'invention n'est pas limitée aux exemples détaillés ci-dessus.

## Revendications

1. Guide d'onde électromagnétique, tel qu'une fibre optique, comprenant un cœur central creux entouré d'une gaine microstructurée formée par un assemblage de cellules élémentaires **caractérisé en ce que** ladite gaine microstructurée comprend en outre au moins une cellule élémentaire, dite hybride, comprenant :
- au moins une première cellule (202₂) insérée dans au moins une deuxième cellule (202₁), et
- au moins un élément intermédiaire (202₄) reliant l'au moins une première cellule (202₂) et l'au moins une deuxième cellule (202₁),
ledit élément intermédiaire présentant une section dont l'aire est inférieure ou égale à 50% de l'aire de la section de chacune desdites cellules qu'il relie, ledit élément intermédiaire ayant un indice de réfraction inférieur ou égal à l'indice de réfraction de chacune desdites cellules élémentaires qu'il relie, ledit élément intermédiaire ayant une structure tubulaire comprenant une paroi entourant une zone centrale.

2. Guide selon la revendication précédente, **caractérisé en ce que** l'élément intermédiaire présente une section dont l'aire est inférieure ou égale à 30% de l'aire de la section de chacune desdites cellules qu'il relie.

3. Guide selon l'une quelconque des revendications précédentes, **caractérisé en ce que** l'une au moins des cellules élémentaires reliées par l'élément intermédiaire comporte une paroi périphérique entourant une zone centrale, l'épaisseur de la paroi dudit élément intermédiaire étant inférieur à 50% de l'épaisseur de ladite ou de chacune desdites cellules élémentaires qu'il relie.

4. Guide selon l'une quelconque des revendications précédentes, **caractérisé en ce qu'**au moins une cellule élémentaire est exclusivement reliée à toute autre cellule élémentaire par au moins un élément intermédiaire.

5. Guide selon l'une quelconque des revendications précédentes, **caractérisé en ce qu'**au moins un élément intermédiaire relie uniquement deux cellules élémentaires.

6. Guide selon l'une quelconque des revendications précédentes, **caractérisé en ce que** au moins un élément intermédiaire relie trois cellules élémentaires adjacentes.

7. Guide selon l'une quelconque des revendications 1 à 5, **caractérisé en ce que** chaque cellule élémentaire est reliée uniquement à une autre cellule élémentaire par un élément intermédiaire.

8. Guide selon l'une quelconque des revendications précédentes, caractérisé en ce l'au moins une cellule hybride comprend au moins deux éléments intermédiaires.

9. Guide selon l'une quelconque des revendications précédentes, caractérisé en ce l'au moins une cellule hybride comprend une troisième cellule élémentaire insérée dans la deuxième cellule élémentaire.

10. Guide selon l'une quelconque des revendications précédentes, **caractérisé en ce que** la gaine microstructurée comprend :
- une première couronne périphérique, comprenant une première série de cellules élémentaires ; et
- une deuxième couronne, concentrique et inscrite dans ladite première couronne périphérique, comprenant une deuxième série de cellules élémentaires.

11. Guide selon la revendication précédente, **caractérisé en ce que** chaque cellule élémentaire de la deuxième couronne est reliée à au moins à une cellule élémentaire de la première couronne, par au moins un élément intermédiaire.

12. Guide selon l'une quelconque des revendications précédentes, **caractérisé en ce qu'**il comprend :
- au moins une enveloppe (902;1002) renfermant la gaine microstructurée (904;1004) ; et
- au moins un élément intermédiaire entre au moins une cellule élémentaire (906; 1006) et ladite enveloppe (902; 1002).

13. Guide selon l'une quelconque des revendications précédentes, dans lequel au moins un élément intermédiaire est réalisé dans le même matériau qu'une cellule élémentaire.

14. Guide selon l'une quelconque des revendications précédentes, dans lequel au moins un élément intermédiaire est réalisé en un matériau différent du matériau d'une cellule élémentaire.

15. Guide selon l'une quelconque des revendications précédentes, dans lequel ledit guide est configuré pour le guidage par couplage-inhibé.

16. Dispositif de guidage d'onde électromagnétique (1200) mettant en œuvre un guide d'onde électromagnétique (1202) selon l'une quelconque des revendications précédentes.

17. Dispositif selon la revendication précédente, **caractérisé en ce qu'**il s'agit d'un dispositif de micro-usinage (1200) utilisant une onde laser, ledit dispositif comprenant au moins un guide d'onde (1202) selon l'une quelconque des revendications 1 à 15 prévus pour être parcouru(s) par ladite onde laser.

18. Dispositif selon la revendication 17, **caractérisé en ce qu'**il s'agit d'un dispositif de télécommunications (1200) émettant et/ou recevant au moins une onde électromagnétique, ledit dispositif comprenant au moins un guide d'onde (1202) selon l'une quelconque des revendications 1 à 15 prévus pour être parcouru(s) par ladite onde électromagnétique.
